# EUROPÄISCHE PATENTSCHRIFT

(11) **EP 2 895 869 B1**
(45) Veröffentlichungstag und Bekanntmachung des Hinweises auf die Patenterteilung: **30.11.2016**
(21) Anmeldenummer: 13766488.4
(22) Anmeldetag: 13.09.2013
(51) Int. Cl.: G01N 35/10, F16H 25/02, F16H 25/20

(54) **KOMBINIERTE BLOCK- UND INDIVIDUALANTRIEBSVORRICHTUNG, INSBESONDERE FÜR PIPETTIERKANÄLE**
COMBINED BLOCK- AND INDIVIDUAL-DRIVE DEVICE, IN PARTICULAR FOR PIPETTING CHANNELS
DISPOSITIF D'ENTRAÎNEMENT INDIVIDUEL OU EN BLOC COMBINÉ, EN PARTICULIER POUR CANAUX DE PIPETAGE

(30) Priorität: 17.09.2012 DE 102012216544
(43) Veröffentlichungstag der Anmeldung: 22.07.2015
(73) Patentinhaber: Hamilton Bonaduz AG, 7402 Bonaduz (CH)
(72) Erfinder: NAWROCKI, Eduard, CH-7402 Bonaduz (CH)
(74) Vertreter: RLTG
(86) Internationale Anmeldenummer: PCT/EP2013/068990
(87) Internationale Veröffentlichungsnummer: WO 2014/041113

(56) Entgegenhaltungen:
- EP-A2- 2 410 342
- DE-U1- 20 006 547
- JP-A- H09 101 315

## Beschreibung

Die vorliegende Erfindung betrifft eine kombinierte Block- und Individualantriebsvorrichtung, welche dazu ausgebildet ist, eine Mehrzahl von, vorzugsweise gleichartigen, Bewegungsobjekten, wie etwa Pipettierkanälen, sowohl als Block gemeinsam längs einer Bewegungsbahn zu bewegen, als auch mit einem vorgegebenen Relativbewegungsmuster relativ zueinander längs der Bewegungsbahn zu bewegen, wobei die Antriebsvorrichtung einen Blockbewegungsantrieb und ein Blockbewegungsübertragungsgetriebe aufweist, welches ein Blockbewegungsausgabeteil des Blockbewegungsantriebs mit den Bewegungsobjekten bewegungsübertragend koppelt, und wobei die Antriebsvorrichtung weiter einen gesondert vom Blockbewegungsantrieb betreibbaren Relativbewegungsantrieb und ein Relativbewegungsübertragungsgetriebe aufweist, welches ein Relativbewegungsausgabeteil des Relativbewegungsantriebs bewegungsübertragend mit den Bewegungsobjekten koppelt, wobei das Blockbewegungsübertragungsgetriebe eine parallel zur Bewegungsbahn verlaufende Antriebsspindel und an jedem Bewegungsobjekt eine von der Antriebsspindel durchsetzte Spindelmutter aufweist, welche gemeinsam mit dem Bewegungsobjekt längs einer parallel zur Bewegungsbahn verlaufenden Antriebsspindellängsachse bewegbar ist.

Eine derartige Block- und Individualantriebsvorrichtung ist an Pipettiervorrichtungen mit mehreren sowohl getrennt voneinander, als auch im Block gemeinsam miteinander bewegbaren Pipettierkanälen bekannt.

Bekannt sind abweichend von der oben definierten gattungsgemäßen kombinierten Block- und Individualantriebsvorrichtung auch einzeln linearmotorisch angetriebene Pipettierkanäle, von denen jedes Bewegungsobjekt einen gesondert betreibbaren Läufer aufweist und die auf einem gemeinsamen Stator laufen. Diese Pipettierkanäle, oder allgemeiner: Bewegungsobjekte, sind durch unterschiedliche Betriebsarten des linearmotorischen Antriebs gemeinsam im Block oder einzeln antreibbar.

Die vorliegende Erfindung geht jedoch aus von einer kombinierten Blockund Individualantriebsvorrichtung, bei welcher das Blockbewegungsübertragungsgetriebe eine parallel zur Bewegungsbahn verlaufende Antriebsspindel und bei welchen weiter jedes Bewegungsobjekt eine von der Antriebsspindel durchsetzte Spindelmutter aufweist. In an sich bekannter Weise können dabei die Bewegungsobjekte durch Drehen der Antriebsspindel um ihre Antriebsspindellängsachse relativ zu den einzelnen Spindelmuttern als Block gemeinsam relativ zur Antriebsspindel längs der Antriebsspindellängsachse bewegt werden.

Kombinierte Block- und Individualantriebsvorrichtungen sind insbesondere an Pipettiervorrichtungen vorteilhaft, bei welchen längs der Bewegungsbahn hintereinander angeordnete Pipettierkanäle als die Bewegungsobjekte in einem vorbestimmten Abstand als gemeinsam bewegbarer Block längs der Bewegungsbahn ohne relative Abstandsänderung bewegbar sind. Fallweise kann eine Änderung des Abstands längs der Bewegungsbahn zwischen den einzelnen Pipettierkanälen, bzw. allgemein: Bewegungsobjekten, erforderlich sein, beispielsweise dann, wenn Flüssigkeit aus einer oder in eine Titerplatte zu pipettieren ist, bei welcher üblicherweise als "Wells" bezeichnete Vertiefungen zur Flüssigkeitsaufnahme einen anderen Abstand aufweisen als bei anderen, mit der gleichen Pipettiervorrichtung zu anderen Zeitpunkten bearbeiteten Titerplatten. Eine derartige Individualbewegung der Pipettierkanäle, bzw. allgemein Bewegungsobjekte, zur Änderung des Abstands längs der Bewegungsbahn zwischen ihnen wird in der vorliegenden Anmeldung auch als "Spreizbewegung" bezeichnet werden.

Pipettiervorrichtungen sind z.B in JPH09101315 A, DE20006547U und EP2410342 A2 offenbart.

Aufgabe der vorliegenden Erfindung ist es, die gattungsgemäße kombinierte Block- und Individualantriebsvorrichtung derart weiterzubilden, dass sie die Blockbewegung wie auch die Relativbewegung mit vorgegebenem Relativbewegungsmuster mit möglichst geringem Aufwand an Vorrichtungen und Steuerungen realisieren kann.

Diese Aufgabe wird gemäß dem Gegenstand des Anspruchs 1 gelöst durch eine kombinierte Block- und Individualantriebsvorrichtung der eingangs genannten Art, bei welcher an wenigstens einem Teil der Bewegungsobjekte, vorzugsweise an allen Bewegungsobjekten bis auf einem, besonders bevorzugt an allen Bewegungsobjekten, die jeweilige wenigstens eine Spindelmutter des Bewegungsobjekts relativ zu diesem um die Antriebsspindellängsachse drehbar aufgenommen ist, sowie dadurch, dass das Relativbewegungsübertragungsgetriebe eine Antriebswelle mit zur Antriebsspindellängsachse paralleler Antriebswellenlängsachse und an jedem Bewegungsobjekt mit relativ zu diesem um die Antriebsspindellängsachse drehbarer Spindelmutter einen gemeinsam mit dem Bewegungsobjekt relativ zur Antriebswelle längs der Antriebswellenlängsachse beweglichen und gemeinsam mit der Antriebswelle drehbaren Gleitstein aufweist, wobei der Gleitstein und die Spindelmutter ein und desselben Bewegungsobjekts derart miteinander in Drehmoment-Übertragungsverbindung stehen, dass die Spindelmutter durch Rotation der Antriebswelle um die Antriebswellenlängsachse unter Bewegungsvermittlung des Gleitsteins zur Drehung um die Antriebsspindellängsachse antreibbar ist, und bei Drehung der Antriebsspindel in Umfangsrichtung um die Antriebsspindellängsachse unter Drehmomentübertragung durch den Gleitstein an der Antriebswelle abgestützt ist.

Mit der vorgeschlagenen erfindungsgemäßen Lösung ist es möglich, eine gemeinsame Blockbewegung der mit Spindelmutter ausgerüsteten Bewegungsobjekte längs der Bewegungsbahn und ebenso eine individuelle Spreizbewegung der Bewegungsobjekte längs der Bewegungsbahn, jedoch unter Veränderung ihres Abstands in Bewegungsbahnrichtung, mit nur zwei Antrieben zu realisieren.

Dabei sind grundsätzlich alle über eine Spindelmutter mit einer gemeinsamen Antriebsspindel bewegungsgekoppelten Bewegungsobjekte zu einer gemeinsamen Blockbewegung antreibbar. Alle zusätzlich mit einem Gleitstein versehenen Bewegungsobjekte sind überdies durch die Antriebswelle zu einer Individualbewegung längs der Bewegungsbahn antreibbar. Dabei können bei k (k ist eine natürliche Zahl größer als 1) vorgesehenen Bewegungsobjekten lediglich k-1 mit Gleitstein ausgerüstet werden, um dennoch durch den Relativbewegungsantrieb eine Abstandsveränderung zwischen allen k Bewegungsobjekten zu bewirken. Das lediglich mit einer Spindelmutter, aber nicht mit einem Gleitstein versehene Bewegungsobjekt bleibt dann beim Antrieb der Antriebswelle an Ort und Stelle und verändert seine Position relativ zur Antriebsspindel nicht, während die übrigen k-1 sowohl mit Spindelmutter als auch mit Gleitstein ausgerüsteten Bewegungsobjekte bei entsprechender Dimensionierung der miteinander in Drehmoment-Übertragungsverbindung stehenden Bauteile: Spindelmutter und Gleitstein, der einzelnen Bewegungsobjekte, angetrieben durch die Antriebswelle eine Bewegung auf das nur mit einer Spindelmutter versehene Bewegungsobjekt zu oder von diesem weg ausführen können. Ob die Individualbewegung eine Annäherungsbewegung oder eine Entfernungsbewegung ist, hängt vom Drehsinn der Antriebswelle und von der konkreten Ausgestaltung der Drehmoment-Übertragungsverbindung zwischen Antriebswelle, Gleitstein und Spindelmutter ab.

Dann, wenn alle mit einer gemeinsamen Antriebsspindel gekoppelten Bewegungsobjekte sowohl mit einer um die Antriebsspindellängsachse drehbaren Spindelmutter als auch mit einem Gleitstein versehen sind, kann beispielsweise durch entsprechende Wahl des Drehsinns und der Drehzahl der Antriebswelle und der Antriebsspindel ein relativ zur Antriebsspindel unbewegtes Bewegungsobjekt frei gewählt werden, während alle übrigen Bewegungsobjekte wiederum eine Annäherungsbewegung oder eine Entfernungsbewegung relativ zu dem durch Betrieb der Antriebe ausgewählten still stehenden Bewegungsobjekt ausführen. Hierzu reicht es aus, Antriebsspindel und Antriebswelle derart über ihre jeweilige Antriebe anzutreiben, dass an der Spindelmutter des ausgewählten unbewegten Bewegungsobjekts keine Relativbewegung zwischen der Spindelmutter und der Antriebsspindel auftritt.

Die Grundidee der hier vorgestellten kombinierten Block- und Individualantriebsvorrichtung beruht darauf, die Spindelmutter eines Bewegungsobjekts dann, wenn dieses auch mit einem Gleitstein versehen ist, nicht drehstarr am Bewegungsobjekt vorzusehen, sondern um die das Bewegungsobjekt durchsetzende Antriebsspindellängsachse relativ zum Bewegungsobjekt drehbar. Die Drehabstützung der Spindelmuttern um die Antriebsspindellängsachse, ohne die es bei Rotation der Antriebsspindel zu kinematisch unbestimmten Verhältnissen an der Schraubeingriffsstelle der Antriebsspindel mit der jeweiligen Spindelmutter käme, erfolgt dann über die Drehmoment-Übertragungsverbindung zwischen Spindelmutter und Gleitstein durch die Antriebswelle. Solange die Antriebswelle stillsteht, also nicht um die Antriebswellenlängsachse rotiert, stehen auch die mit der Antriebswelle zur gemeinsamen Drehung um die Antriebswellenlängsachse gekoppelten Gleitsteine still und arretieren somit die jeweils mit ihnen in Drehmoment-Übertragungseingriff stehenden Spindelmuttern bezüglich einer Drehung um die Antriebsspindellängsachse. Bei stillstehender Antriebswelle verhalten sich die grundsätzlich relativ drehbar an einem Bewegungsobjekt vorgesehenen Spindelmuttern durch die Drehmomentübertragungsverbindung mit den Gleitsteinen wie drehstarr am jeweiligen Bewegungsobjekt vorgesehene Spindelmuttern. Dadurch ist eine gemeinsame Blockbewegung bei Drehung der Antriebsspindel möglich.

Bei Rotation der Antriebswelle kann über die Gleitsteine und die Drehmoment-Übertragungsverbindung mit den jeweiligen Spindelmuttern jede Spindelmutter in Relativdrehung zur Antriebsspindel versetzt werden. Dabei ist die erreichte Relativdrehzahl einer Spindelmutter nur abhängig von der für alle Bewegungsobjekte gleichen Antriebswellendrehzahl und dem in den jeweiligen Bewegungsobjekten gewählten Drehmoment- oder Rotationsbewegungsumsetzungsverhältnis einer Drehbewegung der Antriebswelle relativ zu einer Drehbewegung des mit dieser mittels des Gleitsteins in Drehmoment-Übertragungsverbindung stehenden Spindelmutter. Dadurch ist eine Individualbewegung der derart ausgerüsteten Bewegungsobjekte relativ zueinander längs der Bewegungsbahn möglich.

Der Gleitstein ist als solcher bezeichnet, da er längs der Antriebswelle relativ zu dieser verlagerbar ist.

Die gemeinsame Drehbarkeit eines Gleitsteins mit der Antriebswelle kann in einer weniger bevorzugten, aber gleichwohl voll funktionsfähigen Ausführungsform dadurch realisiert sein, dass die Antriebswelle über einen Längsabschnitt eine Außenverzahnung aufweist, in die ein Gleitstein, welcher ebenfalls mit einer Außenverzahnung versehen ist, kämmend formschlüssig eingreift. Der Gleitstein kann dann im Bewegungsobjekt eine zur Antriebswellenlängsachse parallele und mit Abstand von dieser angeordnete Drehachse aufweisen, wobei der Gleitstein immer dann, wenn die Antriebswelle rotiert, aufgrund des kämmenden Eingriffs mit dieser ebenfalls rotiert. Das Gleiten des Gleitsteins relativ zur Antriebswelle längs der Antriebswellenlängsachse erfolgt dann an der Stelle des kämmenden Eingriffs zwischen Antriebswelle und Gleitstein.

Bevorzugt, weil in der Montage einfacher, ist dagegen der Fall, dass der Gleitstein von der Antriebswelle durchsetzt ist und von dieser im gleichen Drehsinn zur gemeinsamen Drehung angetrieben wird. In diesem Falle ist der Gleitstein gemeinsam mit der Antriebswelle um die Antriebswellenlängsachse drehbar.

Die Drehmoment-Übertragungsverbindung zwischen einem Gleitstein und einer Spindelmutter ein- und desselben Bewegungsobjekts kann in vielerlei Gestalt realisiert sein. Beispielsweise können der Gleitstein und die Spindelmutter als Reibräder ausgebildet sein, die miteinander in Anlageeingriff stehen, um Drehmoment zwischen den beiden Bauteilen übertragen zu können.

Besonders sicher und zuverlässig kann Drehmoment zwischen dem Gleitstein und der Spindelmutter durch eine formschlüssige Drehmoment-Übertragungsverbindung übertragen werden. Aus diesem Grunde ist eine formschlüssige Drehmoment-Übertragungsverbindung zwischen Gleitstein und Spindelmutter ein- und desselben Bewegungsobjekts bevorzugt. Gemäß einer noch stärker bevorzugten Weiterbildung der vorliegenden Erfindung ist die formschlüssige Drehmoment-Übertragungsverbindung durch miteinander kämmende Verzahnungsformationen an der Spindelmutter oder/und am Gleitstein realisiert. Daher können in einem besonders bevorzugten Fall sowohl die Spindelmutter als auch der Gleitstein an ihren Außenumfängen jeweils als Zahnrad ausgebildet sein.

Grundsätzlich ist zur Erzielung einer möglichst geringen Bauteilanzahl bevorzugt, den Gleitstein und die Spindel eines Bewegungsobjekts unmittelbar miteinander in Drhemoment-Übertragungsverbindung anzuordnen, also beispielsweise den Gleitstein und die Spindelmutter, bevorzugt als Zahnradformationen, unmittelbar miteinander kämmen zu lassen. Dies ist jedoch nicht die einzig mögliche Ausgestaltungsform der vorliegenden Erfindung. Ebenso kann daran gedacht sein, im Drehmoment-Übertragungsweg zwischen Gleitstein und Spindelmutter ein oder mehrere Zwischenglieder anzuordnen, etwa in Form von Reib- oder bevorzugt von Zahnrädern. Durch die Anordnung von Zwischengliedern kann ein größerer Freiheitsgrad bei der Einstellung von Umsetzungsverhältnissen des Drehmoments und der Drehzahl zwischen der Antriebswelle und der Spindelmutter erreicht werden. Außerdem kann die Anordnung von Zwischengliedern - insbesondere in ungerader Anzahl - kinematisch von Vorteil sein.

Zur Erzielung bestimmter Relativbewegungsmuster kann auch vorgesehen sein, einen Teil der Bewegungsobjekte mit Zwischengliedern zu versehen und in einem anderen Teil Gleitstein und Spindelmutter unmittelbar miteinander in Drehmoment-Übertragungseingriff zu setzen. Das kinematisch gleiche Ergebnis kann dadurch erzielt werden, dass in einem Teil der Bewegungsobjekte eine gerade Anzahl an Zwischengliedern zwischen Gleitstein und Spindelmutter drehmomentübertragend angeordnet sind und in einem anderen Teil der Bewegungsobjekte eine ungerade Anzahl derselben. Dann sind beispielsweise Relativbewegungsmuster erzeugbar, bei welchen zwei unmittelbar längs der Bewegungsbahn benachbarte Bewegungsobjekte sich bei Drehung der Antriebswelle annähern, während sich die diesem Paar nächstgelegenen Nachbar-Bewegungsobjekte von diesen entfernen. Hierzu müssten Bewegungsobjekte längs der Bewegungsbahn abwechselnd ohne bzw. mit einer geraden Anzahl von Zwischengliedern und mit einer ungeraden Anzahl von Zwischengliedern versehen sein.

Um eine Bewegung von Gleitsteinen unterschiedlicher Bewegungsobjekte relativ zueinander längs der Antriebswellenlängsachse einfach und sicher gewährleisten zu können, insbesondere unabhängig vom Verlagerungsort eines Bewegungsobjekts den Eingriff der Antriebswelle mit dem jeweiligen Gleitstein des Bewegungsobjekts sicherstellen zu können, ist es vorteilhaft, wenn die Antriebswelle wenigstens über einen axialen Relativbewegungsabschnitt, in welchem die Gleitsteine längs der Antriebswellenlängsachse relativ zueinander bewegbar sind, eine im Wesentlichen konstante, bezogen auf die Antriebswellenlängsachse nicht-rotationssymmetrische Außenkontur aufweist.

Die oben bezeichnete durchsetzende Anordnung von Antriebswelle und Gleitsteinen kann dann besonders einfach und vorteilhaft zur sicheren Übertragung selbst von hohen Drehmomenten auf die auf der Antriebswelle sitzenden Gleitsteine genutzt werden, wenn die Antriebswelle als Keilwelle ausgebildet ist.

Eine Relativbewegung der mit Gleitsteinen und Spindelmuttern versehenen Bewegungsobjekte relativ zueinander ist durch Drehung der gemeinsamen Antriebswelle dann ohne Weiteres erreichbar, wenn die Rotationsbewegungs-Umsetzungsverhältnisse, mit welchen in einem Bewegungsobjekt eine Rotation der Antriebswelle um die Antriebswellenlängsachse in eine Rotation der Spindelmutter um die Antriebsspindellängsachse umgesetzt wird, für unterschiedliche Bewegungsobjekte derselben Vorrichtung unterschiedlich sind. Das Rotationsbewegungs-Umsetzungsverhältnis kann ein Übersetzungsverhältnis oder ein Untersetzungsverhältnis sein. Es kann auch in einem Teil der durch eine Block- und Individualantriebsvorrichtung der vorliegenden Erfindung angetriebenen Bewegungsobjekte ein Übersetzungsverhältnis und für einen anderen Teil ein Untersetzungsverhältnis sein. Weiterhin kann an einem der Bewegungsobjekte - je nach gewünschtem vorbestimmten Relativbewegungsmuster - das Umsetzungsverhältnis ein 1:1-Verhältnis sein, bei welchem die Drehzahl der Spindelmutter der Drehzahl der Antriebswelle entspricht.

Für die Erzielung einer gleichmäßigen Spreizbewegung als der bevorzugten vorbestimmten Relativbewegung (Relativbewegungsmuster), also einer Spreizbewegung, bei welcher der Abstand längs der Antriebsspindellängsachse zwischen allen beteiligen Bewegungsobjekten bei Rotation der Antriebswelle im Wesentlichen gleichmäßig zunimmt oder abnimmt, ist es vorteilhaft, wenn die Unterschiede zwischen den Rotationsbewegungs-Umsetzungsverhältnissen der drehmomentübertragenden Bauteilpaare: Spindelmutter-Gleitstein, der Bewegungsobjekte nicht allzu groß sind. Beispielsweise kann vorteilhaft vorgesehen sein, dass die Unterschiede zwischen den Rotationsbewegungs-Umsetzungsverhältnissen zweier längs der Bewegungsbahn unmittelbar benachbarter Bewegungsobjekte für alle sowohl im Block als auch relativ zu einander mit einem vorbestimmten Bewegungsmuster bewegbaren Bewegungsobjekte einer Vorrichtung um nicht mehr als 5 %, vorzugsweise um nicht mehr als 3 %, bezogen auf den kleinsten auftretenden Unterschiedswert verschieden sind, besonders bevorzugt konstant sind.

Dann, wenn der Relativbewegungsweg der einzelnen Bewegungsobjekte relativ zueinander so gering ist, dass die Antriebswelle zur Erzielung des gewünschten Relativbewegungsmusters keine vollständige Umdrehung zurücklegen muss, kann ein Gleitstein oder/und eine Spindelmutter eines Bewegungsobjekts auch nur als Reibrad- oder Zahnradsegment ausgebildet sein. Bevorzugt ist jedoch zur Erzielung möglichst langer Relativbewegungswege der Bewegungsobjekte relativ zueinander vorgesehen, dass sowohl der Gleitstein als auch die Spindelmutter ein und desselben Bewegungsobjekts als Rotationskörper, insbesondere als Reib- oder Zahnräder, ausgebildet sind, wobei die Durchmesser der Gleitsteine oder/und der Spindelmuttern oder/und von etwaig zwischen diesen drehmomentübertragend angeordneten Zwischenrotationskörpern von unterschiedlichen Bewegungsobjekten, die sowohl im Block als auch relativ zu einander mit einem vorbestimmten Bewegungsmuster bewegbar sind, unterschiedlich sind. Durch Änderung der Durchmesser der an der Bewegungs- oder Drehmomentübertragung beteiligten Rotationskörper kann in an sich bekannter Weise das Rotationsbewegungs-Umsetzungsverhältnis von der Antriebswelle zur Spindelmutter einfach eingestellt werden. Die oben genannten Zwischenrotationskörper sind dabei Weiterbildungen der zuvor genannten Zwischenglieder.

Zur Erzielung der oben genannten möglichst gleichmäßigen Unterschiede der Drehmoment-Umsetzungsverhältnisse in den einzelnden Bewegungsobjekten einer Vorrichtung kann entsprechend der gerade geschilderten vorteilhaften Weiterbildung der vorliegenden Erfindung vorgesehen sein, das die Unterschiede zwischen den Durchmessern der Gleitsteine oder/und der Spindelmuttern oder/und von zwischen diesen etwaig drehmomentübertragend angeordneten Zwischenrotationskörpern zweier längs der Bewegungsbahn unmittelbar benachbarter Bewegungsobjekte für alle sowohl im Block als auch relativ zu einander mit einem vorbestimmten Bewegungsmuster bewegbaren Bewegungsobjekte einer Vorrichtung um nicht mehr als 5 %, vorzugsweise um nicht mehr als 3 %, bezogen auf den kleinsten Durchmesser des jeweiligen Rotationskörpers verschieden sind, besonders bevorzugt konstant sind. Dabei sind jeweils die Unterschiede der Durchmesser gleichartiger Getriebeteile gemeint, also die Unterschiede der Durchmesser axial unmittelbar benachbarter Gleitsteine zum einen, die Unterschiede der Durchmesser axial unmittelbar benachbarter Spindelmuttern zum anderen und die Unterschiede der Durchmesser funktionsgleicher axial unmittelbar benachbarter Zwischenräder, so überhaupt vorhanden, zum dritten. Mit einer entsprechenden Bemessung der Durchmesser ist somit die oben dargelegte Unterschiedsbedingung mit einfachen konstruktiven Mitteln erfüllbar.

Um Sorge dafür zu tragen, dass die Spindelmutter und die drehmomentübertragenden Bauteile eines Relativbewegungsübertragungsgetriebes in einund dasselbe Gehäuse für ein Bewegungsobjekt passen, so dass die Bewegungsobjekte möglichst mit gleichen Außenabmessungen bereitgestellt werden können, kann vorgesehen sein, dass die Summe der Durchmesser aller an einer Drehmomentübertragung von der Antriebswelle auf die Spindelmutter eines Bewegungsobjekts beteiligten Rotationskörper des Bewegungsobjekts für alle sowohl im Block als auch relativ zu einander mit einem vorbestimmten Bewegungsmuster bewegbaren Bewegungsobjekte einer Vorrichtung konstant ist. Die Bedingung der konstanten Durchmesser ist insbesondere dann von Vorteil, wenn ein von der Antriebswelle durchsetzter Gleitstein unmittelbar mit einer Spindelmutter zur Drehmomentübertragung kämmt, denn der Abstand der Antriebsspindellängsachse und der Antriebswellenlängsachse sind aufgrund der oben genannten Parallelität konstant.

Besonders vorteilhaft ist die Anwendung der hier beschriebenen kombinierten Block- und Relativbewegungsanordnung an Pipettiervorrichtungen mit einer Mehrzahl von gesondert ausgebildeten Pipettierkanälen. Jeder Pipettierkanal kann dabei an einem gesondert ausgebildeten Pipettierkanalträger aufgenommen sein. Die einzelnen Pipettierkanalträger können durch eine Linearführungseinrichtung zur Bewegung längs der Bewegungsbahn geführt sein. In diesem Falle kann durch eine kombinierte Block- und Individualantriebsvorrichtung, wie sie oben vorgestellt wurde, die Mehrzahl der Pipettierkanalträger als die oben im Zusammenhang mit der Antriebsvorrichtung beschriebenen Bewegungsobjekte längs der Bewegungsbahn als Block gemeinsam oder nach einem durch die Rotationsbewegungs-Umsetzungsverhältnisse in den einzelnen Pipettierkanalträgern vorbestimmten Relativbewegungsmuster längs der Bewegungsbahn bewegt werden.

Um die Pipettierkanäle nicht nur längs der Bewegungsbahn, sondern in einer Ebene bewegen zu können, kann vorgesehen sein, dass die Pipettiervorrichtung eine zweite Linearführungseinrichtung mit zur Bewegungsbahn der vorgenannten orthogonaler Führungsrichtung aufweist, durch welche die vorgenannte Linearführungseinrichtung mit den daran geführten Pipettierkanalträgern in der zur Bewegungsbahn orthogonalen Führungsrichtung als Bewegungseinheit bewegbar geführt ist. Es ergibt sich somit eine Art Kreuztisch-Anordnung der Linearführung der Pipettierkanalträger.

Die vorliegende Erfindung wird nachfolgend anhand der beiliegenden Zeichnungen näher erläutert. Es stellt dar:
- Fig. 1-3: eine erfindungsgemäße Ausführungsform einer kombinierten Block- und Individualantriebsvorrichtung an einer Pipettiervorrichtung mit 8 Pipettierkanälen in unterschiedlichen Stellungen der Pipettierkanäle, zwischen welchen diese als Block gemeinsam bewegt wurden,
- Fig. 4: die Pipettiervorrichtung der Fig. 1 bis 3 mit der erfindungsgemäßen Ausführungsform einer kombinierten Block- und Individualantriebsvorrichtung, nachdem die Pipettierkanäle ausgehend von der engen Relativstellung der Fig. 1 bis 3 eine erste abstandsvergrößernde Spreizbewegung ausgeführt haben,
- Fig. 5: die Pipettiervorrichtung der Fig. 4, nachdem die Pipettierkanäle eine weitere abstandsvergrößernde Spreizbewegung ausgeführt haben und im Block gemeinsam bewegt wurden,
- Fig. 6: die Ausführungsform der Fig. 5 nach einer noch weiteren abstandsvergrößernden Spreizbewegung der Pipettierkanäle und nach einer noch weiteren gemeinsamen Blockbewegung,
- Fig. 7: eine perspektivische Detailansicht der Pipettierkanäle der Pipettiervorrichtung der Fig. 1 bis 6 mit Darstellung der Linearführungssituation der Pipettierkanäle, des Blockbewegungsantriebs, des Relativbewegungsantriebs und der zugehörigen Getriebe,
- Fig. 8: eine perspektivische Detailansicht des Blockbewegungsantriebs, des Relativbewegungsantriebs, des Blockbewegungsübertragungsgetriebes und des Relativbewegungsübertragungsgetriebes der kombinierten Block- und Individualantriebsvorrichtung der Pipettiervorrichtung der Fig. 1 bis 7,
- Fig. 9: ein Getriebemodul der Fig. 7 und 8, und
- Fig. 10: ein Antriebsmodul der Fig. 7 und 8, welches bauartbedingt nur bei einer Blockantriebsbewegung relativ zur Antriebsspindel bewegbar ist.

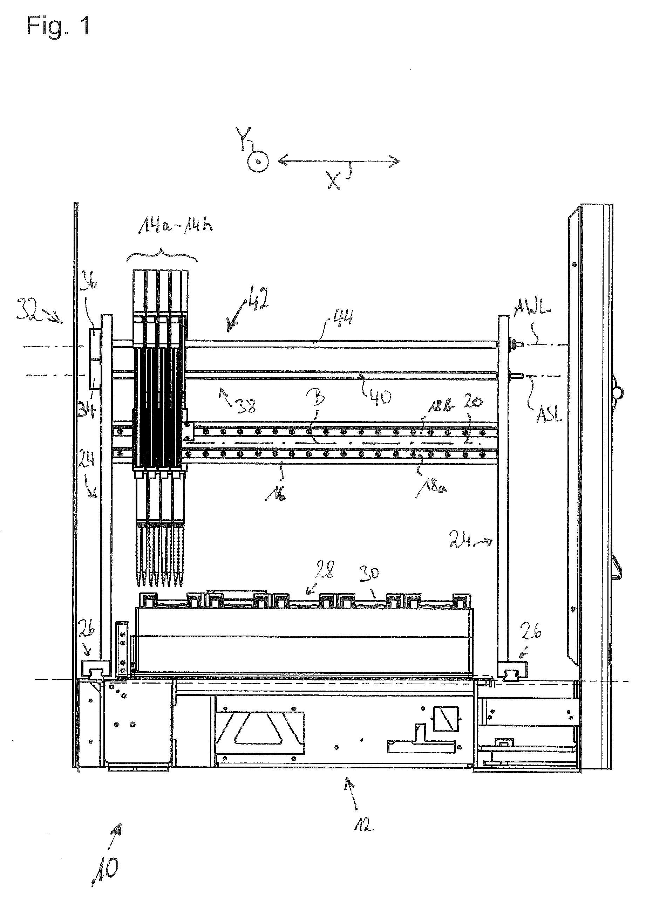

In Fig. 1 ist eine Pipettiereinrichtung allgemein mit 10 bezeichnet. Die Pipettiervorrichtung weist ein an sich bekanntes Vorrichtungsgestell 12 auf, an welchem 8 Pipettierkanäle 14a-14h in einer durch die Pfeile X und Y aufgespannten, zur Zeichenebene der Fig. 1 orthogonalen Bewegungsebene beweglich gelagert und geführt sind.

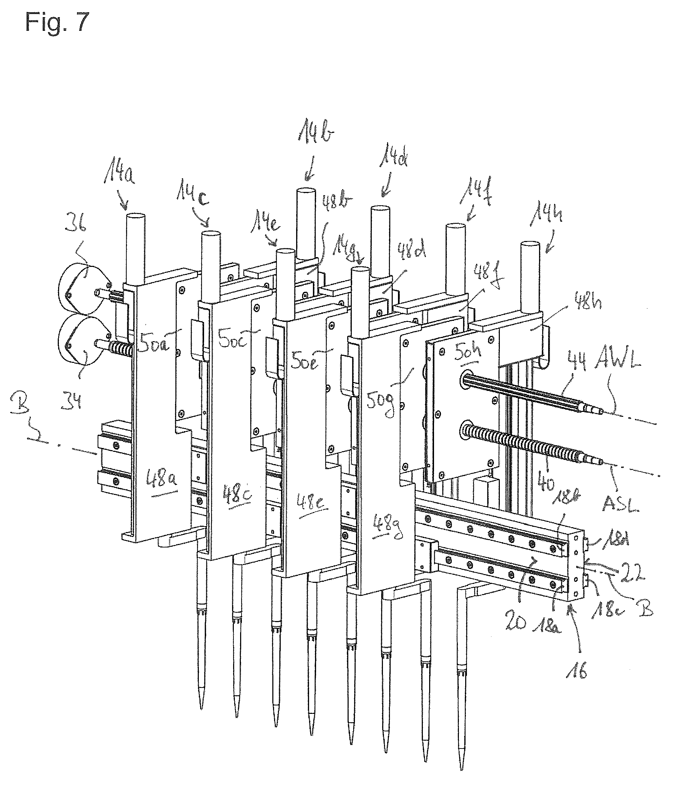

Die Pipettierkanäle 14a-14h sind zur Bewegung in X-Richtung einzeln und unabhängig voneinander an einer ersten Linearführungseinrichtung 16 geführt. Die erste Linearführungseinrichtung 16 kann eine Mehrzahl von parallelen Führungsschienen 18a-18d (siehe auch Fig. 7) aufweisen, von denen zwei Führungsschienen, hier: Führungsschienen 18a und 18b, auf der in Fig. 1 dem Betrachter zugewandten Seite 20 der ersten Linearführungseinrichtung 16 vorgesehen sein können, und von denen zwei weitere, hier: Führungsschienen 18c und 18d, auf der in Fig. 1 vom Betrachter abgewandten entgegengesetzten Seite 22 der ersten Linearführungseinrichtung 16 angeordnet sein können.

Eine derartige bevorzugte Ausbildung der ersten Linearführungseinrichtung 16 ermöglicht ein Anordnen der Pipettierkanäle 14a-14h mit sehr geringem Abstand voneinander. Hierzu kann vorgesehen sein, dass in X-Richtung unmittelbar aufeinander folgende Pipettierkanäle alternierend an einer auf der Seite 20 und an einer auf der Seite 22 angeordneten Führungsschiene geführt sind. Es kann darüber hinaus weiter vorgesehen sein, dass in X-Richtung aufeinander folgende Pipettierkanäle, die an derselben Seite der ersten Linearführungseinrichtung 16 geführt sind, abwechselnd an unterschiedlichen Führungsschienen dieser Seite der ersten Linearführungseinrichtung 16 geführt sind. Dies ermöglicht die Verwendung von Führungswägen mit ausreichender Führungslänge für jeden Pipettierkanal, denn bei der oben geschilderten bevorzugten Führungsanordnung liegen zwischen zwei auf derselben Führungsschiene geführten Pipettierkanälen drei weitere Pipettierkanäle. Die auf derselben Führungsschiene geführten Pipettierkanäle bestimmen jedoch den Mindestabstand zwischen diesen aufgrund der auf der gleichen Führungsschiene bewegten Führungswägen. Je mehr Pipettierkanäle zwischen zwei auf derselben Führungsschiene geführten Pipettierkanälen angeordnet werden können, desto geringer kann der Abstand in X-Richtung zwischen unmittelbar aufeinander folgenden Pipettierkanälen sein.

Die erste Linearführungseinrichtung 16 ist, vorzugsweise an ihren beiden Längsenden, an einem Untergestell 24 befestigt, welches wiederum über eine zweite Linearführungseinrichtung 26 in der zur X-Richtung orthogonalen Y-Richtung linearbeweglich geführt sein kann. Damit kann eine Art Portalbauweise erreicht werden, mit welcher die Pipettierkanäle 14a-14h über einen Arbeitstisch 28 in einer zur Arbeitstischfläche 30 parallelen X-Y-Ebene bewegt werden können.

Zur besseren Stabilisierung kann die zweite Linearführungseinrichtung 26 mehrteilig, hier: zweiteilig, ausgeführt sein.

Die Pipettierkanäle 14a-14h sind somit längs parallel zur X-Richtung verlaufenden Bewegungsbahn B verschieblich an der ersten Linearführungseinrichtung 16 geführt.

Weiter ist an der Pipettiervorrichtung 10 eine kombinierte Block- und Individualantriebsvorrichtung 32 vorgesehen, durch welche, wie nachfolgend im Detail erläutert werden wird, die Pipettierkanäle 14a-14h längs der Bewegungsbahn B, also in dem dargestellten Beispiel in X-Richtung, wahlweise gemeinsam als Block bewegt werden können oder individuell gemäß einem vorbestimmten Relativbewegungsmuster relativ zueinander bewegt werden können.

Die kombinierte Block- und Individualantriebsvorrichtung umfasst einen Blockbewegungsantrieb 34 und einen Relativbewegungsantrieb 36, welche beide an dem selben Teil des Untergestells 24 oder an unterschiedlichen Bauteilen des Untergestells 24 vorgesehen sein können, je nachdem, wie viel Bauraum an den einzelnen Bauteilen zu deren Anbringung zur Verfügung steht. Bei den Antrieben 34 und 36 handelt es sich bevorzugt um identische Drehantriebe, deren in den Figuren nicht dargestelltes Bewegungsausgabeteil eine Drehbewegung ausgibt.

An den Blockbewegungsantrieb 34 ist ein Blockbewegungsübertragungsgetriebe 38 angekoppelt, welches unter anderem eine Antriebsspindel 40 aufweist, die sich längs einer parallel zur Bewegungsbahn B, also ebenfalls in X-Richtung, verlaufenden Arbeitsspindellängsachse ASL erstreckt. Wie weiter unten erläutert werden wird, umfasst das Blockbewegungsübertragungsgetriebe 38 weitere Getriebebauteile an den einzelnen Pipettierkanälen 14a-14h.

An den Relativbewegungsantrieb 36 ist ein Relativbewegungsübertragungsgetriebe 42 angekoppelt, welches unter anderem eine Antriebswelle 44 umfasst, die sich parallel zur Antriebsspindel 40 erstreckt. Genauer erstreckt sich die Antriebswelle 44 längs einer Antriebswellenlängsachse AWL, die parallel zur Antriebsspindellängsachse ASL verläuft. Das Relativbewegungsübertragungsgetriebe 42 umfasst weitere Bauteile in den einzelnen Pipettierkanälen, im dargestellten Beispiel in den Pipettierkanälen 14b-14h.

Die Antriebsspindel 40 und die Antriebswelle 44 sind durch Betrieb des jeweils mit ihnen verbundenen Antriebs, Blockbewegungsantrieb 34 und Relativbewegungsantrieb 36, in Rotation um ihre jeweiligen Längsachsen versetzbar. Bei Rotation der Antriebsspindel 40 um ihre Antriebsspindellängsachse ASL werden die Pipettierkanäle 14a-14h gemeinsam im Block längs der Bewegungsbahn B bewegt, wobei die Bewegungsrichtung vom Drehsinn der Antriebsspindel 40 abhängt. Es tritt dann also keine Relativgeschwindigkeit zwischen den einzelnen Pipettierkanälen 14a-14h auf.

Dann, wenn die Antriebswelle 44 um ihre Antriebswellenlängsachse AWL in Drehung versetzt wird, werden die einzelnen Pipettierkanäle 14a-14h längs der Bewegungsbahn mit unterschiedlichen Relativgeschwindigkeiten angetrieben, so dass es zu einer Relativbewegung der Pipettierkanäle 14a-14h längs der Bewegungsbahn relativ zueinander kommt. Die Abstände zwischen den einzelnen Pipettierkanälen 14a-14h ändern sich dementsprechend, d. h. sie werden kleiner oder größer, abhängig vom Drehsinn der Antriebswelle 44.

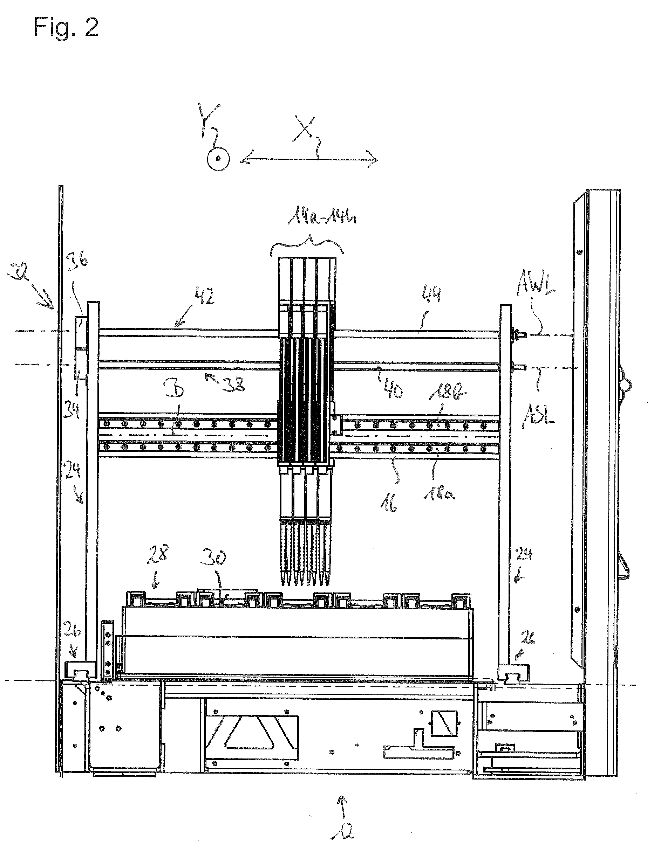

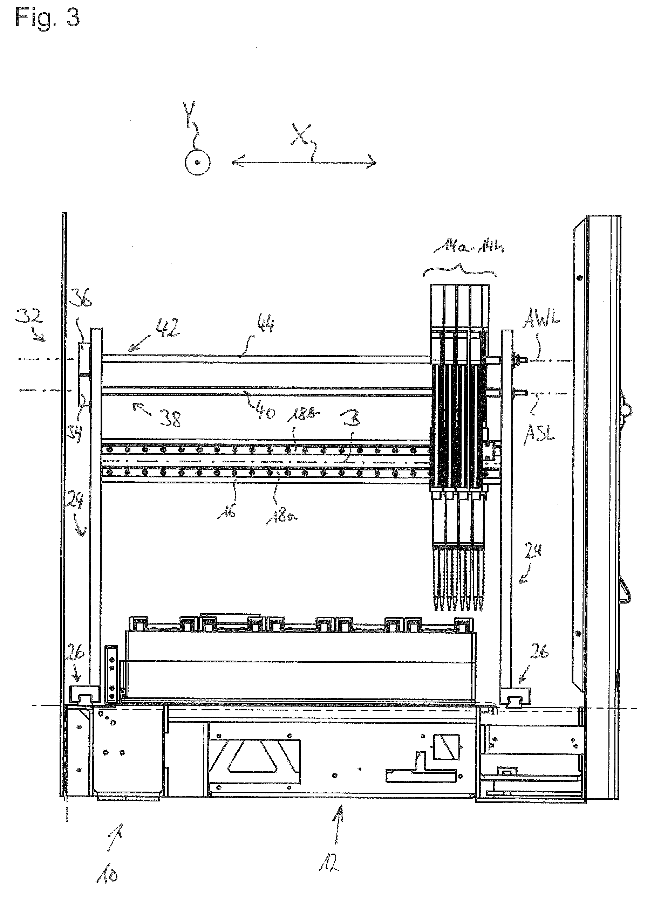

In den Fig. 2 und 3 ist das Ergebnis einer Blockbewegung der Pipettierkanäle 14a-14h ausgehend von dem in Fig. 1 gezeigten Zustand gezeigt, wobei in Fig. 2 die Pipettierkanäle 14a-14h im Block gemeinsam etwa in die Längsmitte der ersten Linearführungseinrichtung 16 bewegt wurden und wobei die Fig. 3 einen Zustand zeigt, in welchem die Pipettierkanäle 14a-14h im Block gemeinsam bis zum, bezüglich jenem der Fig. 1, entgegengesetzten Längsende der ersten Linearführungseinrichtung 16 bewegt wurden.

Wie oben dargelegt, ist die in den Fig. 1 bis 3 gezeigte blockweise Verlagerung der Pipettierkanäle 14a-14h Ergebnis einer ausschließlichen Rotation der Antriebsspindel 40.

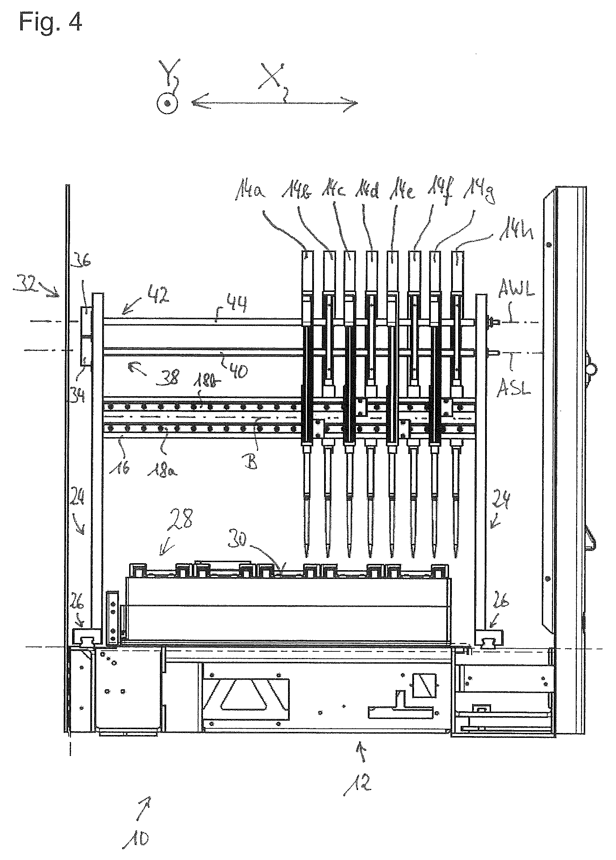

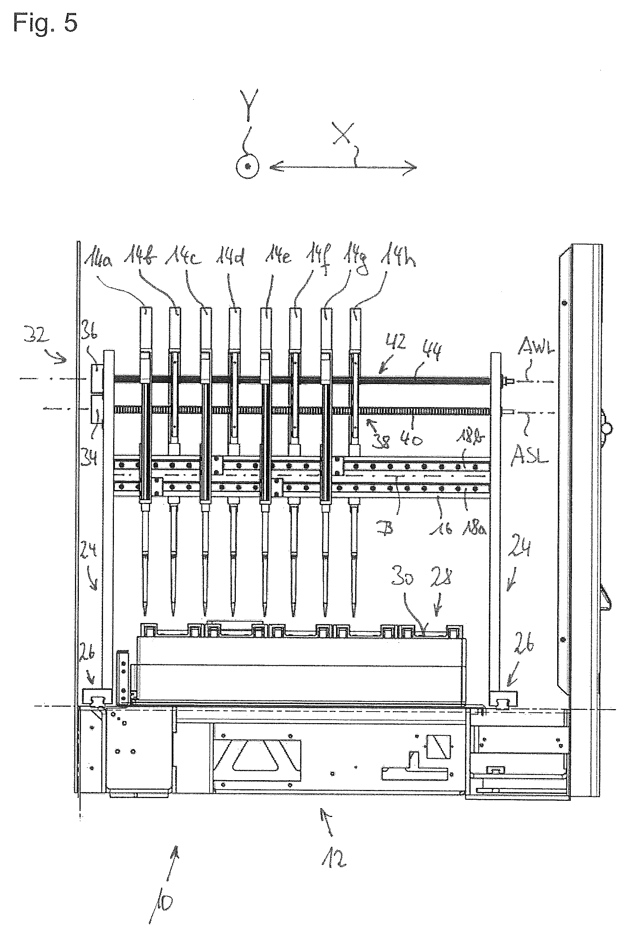

Die Fig. 4 bis 6 zeigen Stellungen der Pipettierkanäle 14a-14h nach unterschiedlichen Relativbewegungen der Pipettierkanäle 14a-14h relativ zueinander. Diese Relativbewegungen werden durch eine Rotation der Antriebswelle 44 um die Antriebswellenlängsachse AWL bewirkt.

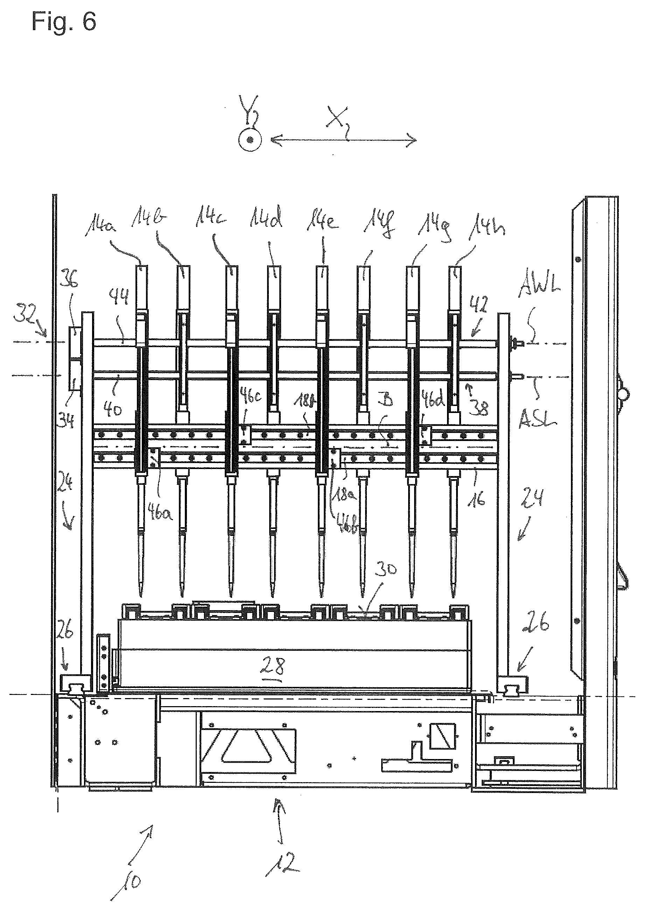

In Fig. 6 ist überdies zu erkennen, dass beispielsweise die Pipettierkanäle 14a und 14e mit Führungswagen 46a und 46b an der Führungsschiene 18a geführt sein können, während die Pipettierkanäle 14c und 14g mittels Führungswägen 46c bzw. 46d an der Führungsschiene 18b geführt sein können. Somit sind die Pipettierkanäle 14a, 14c, 14e und 14g auf der Seite 20 der ersten Linearführungseinrichtung 16 geführt. Dementsprechend können die Pipettierkanäle 14b, 14d, 14f und 14h auf der entgegengesetzten Seite 22 der ersten Linearführungseinrichtung 16 geführt sein, beispielsweise können dabei die Pipettierkanäle 14b und 14f an einer gemeinsamen Führungsschiene geführt sein können die Pipettierkanäle 14d und 14h an einer gemeinsamen anderen Führungsschiene zur Bewegung längs der Bewegungsbahn B geführt sein.

Die Pipettierkanäle 14a-14h sind an sich herkömmliche Pipettierkanäle mit Pipettierkanalträgern 48, wobei jedem Pipettierkanalträger 48 der gleiche Kleinbuchstabe zugeordnet ist wie dem dem Pipettierkanalträger 48 zugeordneten Pipettierkanal 14.

Jeder Pipettierkanalträger 48a-48h kann dabei ein ihm zugeordnetes Getriebemodul 50 tragen, wobei den Getriebemodulen 50 der gleiche Kleinbuchstabe zugeordnet ist, wie den sie jeweils tragenden Pipettierkanalträgern 48. Aus Gründen der besseren Übersichtlichkeit sind in Fig. 7 nur die deutlich erkennbaren Module 50a, 50c, 50e, 50g und 50h mit Bezugszeichen versehen.

Die Module 50a bis 50h sind vorzugsweise sowohl von der Antriebsspindel 40 als auch von der Antriebswelle 44 durchsetzt. Jedes Modul 50 ist zur gemeinsamen Bewegung längs der Bewegungsbahn B mit dem ihm jeweils zugeordneten Pipettierkanalträger 48 und damit mit dem ihm jeweils zugeordneten Pipettierkanal 14 verbunden, beispielsweise durch Verschraubung.

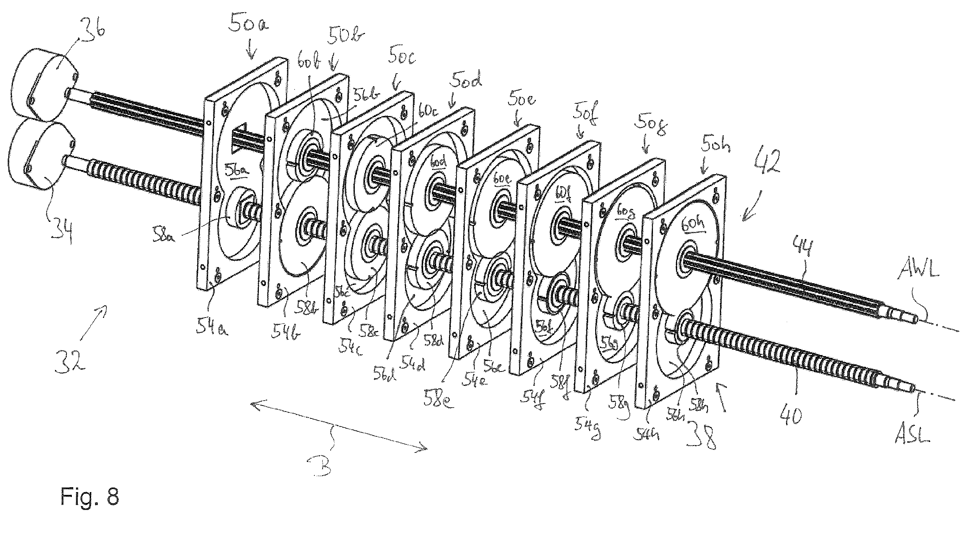

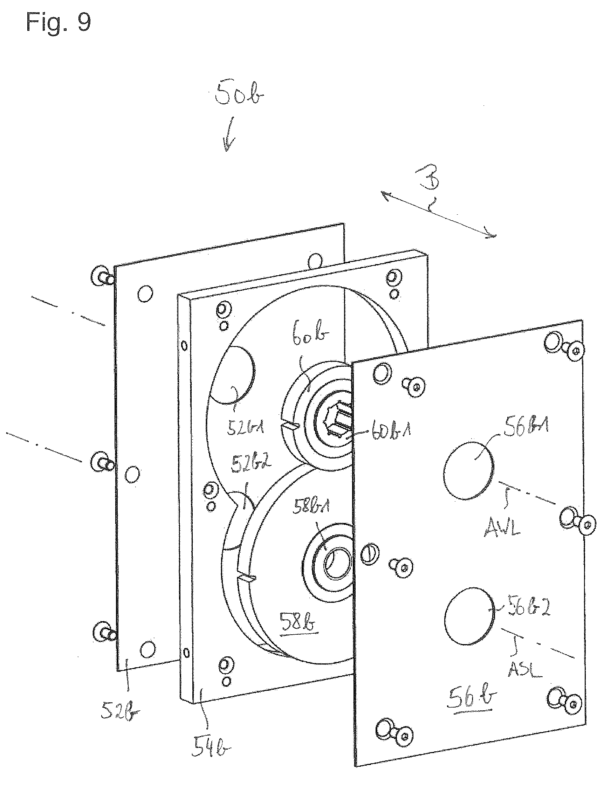

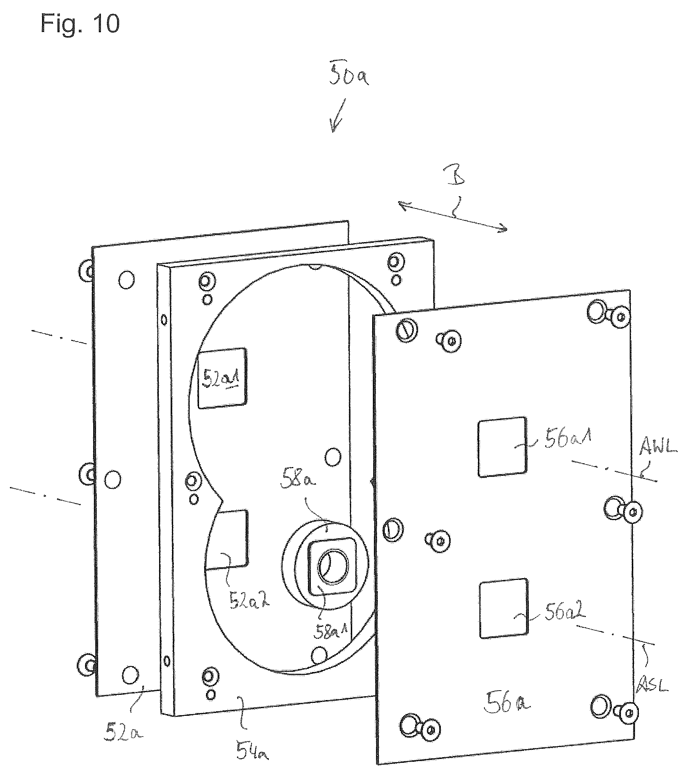

In Fig. 8 ist nur die kombinierte Block- und Individualantriebsvorrichtung 32 ohne Pipettierkanalträger dargestellt. Zur deutlicheren Erkennbarkeit des Blockbewegungsübertragungsgetriebes 38 und des Relativbewegungsübertragungsgetriebes 42 sind von den Modulen 50a-50h die von den Antrieben 34 und 36 ferner liegenden Stirnplatten 52 (siehe auch Fig. 9 und 10) weggelassen. Jedes Modul 50 kann zusätzlich zu der in Fig. 8 weggelassenen antriebsfernen Stirnplatte 52 ein Mantelgehäuseteil 54 und eine antriebsnähere Stirnplatte 56 aufweisen. Das Mantelgehäuseteil 54 kann sandwichartig zwischen den beiden Stirnplatten 52 und 56 angeordnet sein (siehe auch Fig. 9 und 10). Wiederum sind den Gehäuseteilen der Module 50 die gleichen Kleinbuchstaben zugeordnet wie dem Modul selbst, zu dem die Gehäuseteile gehören. Die Mantelgehäuseteile 54 können die die Module 50 durchsetzenden Getriebeteile: Antriebsspindel 40 und Antriebswelle 44, in einer zu den jeweiligen Längsachsen ASL und AWL orthogonalen Ebene umgeben. Somit können die Module 50 ein geschlossenes Gehäuse aufweisen, in dessen Innerem weitere Getriebeteile aufgenommen sein können.
So ist beispielsweise in jedem Modul 50a-50h eine Spindelmutter 58 aufgenommen, welche mit der Außenumfangsfläche der Antriebsspindel 40 in Schraubeingriff steht. Durch diesen Schraubeingriff sind die Spindelmuttern 58a-58h relativ zur Antriebsspindel 40 längs der Antriebsspindellängsachse ASL bewegbar. Dabei ist die Geschwindigkeit, mit welcher sich die Spindelmuttern 58a-58h längs der Antriebsspindellängsachse ASL bewegen, abhängig von der Steigung des Spindelgewindes der Spindelmutter 40 und abhängig von der Drehzahl, mit welcher die Antriebsspindel 40 um ihre Längsachse ASL rotiert. Da jedoch die Drehgeschwindigkeit der Antriebsspindel 40 und ebenso die Gewindesteigung ihres Spindelgewindes für alle Spindelmuttern 58a-58h gleich ist, erzielen alle Spindelmuttern 58a-58h bei Drehung der Spindelmutter 40 die gleiche Absolutgeschwindigkeit relativ zur Spindelmutter 40, d. h. es wird keine Relativgeschwindigkeit zwischen den Spindelmuttern 58a-58h auftreten.
Während die Spindelmutter 58a des Moduls 50a beispielhaft drehfest am Modul 50a und damit insgesamt an dem Pipettierkanal 14a festgelegt ist, bewegt sich in dem in den Fig. 1 bis 10 dargestellten Beispiel das Modul 50a und damit der Pipettierkanal 14a ausschließlich durch Drehung der Antriebsspindel 40 mit der durch Steigung des Spindelgewindes und Drehzahl der Antriebsspindel 40 bestimmten translatorischen Geschwindigkeit längs der Bewegungsbahn B. Das Modul 50a wird weiter unten im Zusammenhang mit Fig. 10 näher beschrieben werden.

Die Spindelmuttern 58b-58h der Module 50b-50h sind im Gegensatz zur Spindelmutter 58a des Moduls 50a relativ zu dem sie jeweils tragenden Modul 50b-50h, d. h. relativ zu dem sie tragenden Pipettierkanalträger 48b-48h um die Antriebsspindellängsachse ASL drehbar in den Modulen 50b-50h aufgenommen.

Während also bei Rotation der Antriebsspindel 40 die Spindelmutter 58a des Moduls 50a in dem dargestellten Beispiel bezüglich eines Drehmoments um die Antriebsspindellängsachse ASL am Modulgehäuse, genauer an den Stirnplatten 52a und 56a abgestützt ist, bedürfen die Spindelmuttern 58b-58h aufgrund ihrer drehbaren Lagerung im jeweiligen Modul 50b-50h einer Drehmomentenabstützung, um ein Mitdrehen der Spindelmuttern 58b-58h im Falle der Rotation der Antriebsspindel 40 um ihre Längsachse ASL zu vermeiden.

Diese Abstützung erfolgt über Gleitsteine 60b-60h, welche in den Modulen 50 mit gleichen Kleinbuchstaben gemeinsam mit dem Modul und damit gemeinsam mit dem das Modul 50 tragenden Pipettierkanal 14 längs der Bewegungsbahn B verschieblich und um die Antriebswellenlängsachse AWL drehbar aufgenommen sind. Die gemeinsame Axialverschieblichkeit von Gleitstein 60 und dem ihn aufnehmenden Modul 50 kann durch die Stirnplatten 52 und 56 bewirkt sein, welche den Gleitstein 60 eines Moduls 50 zwischen sich sandwichartig aufnehmen können.

Die Gleitsteine 60 können dann, wenn sie wie im vorliegenden Beispiel von der Antriebswelle 44 durchsetzt sind, formschlüssig drehfest die Antriebswelle 44 umgeben und gemeinsam mit dieser drehen. Dies kann beispielsweise dadurch erreicht werden, dass die Antriebswelle 44 zumindest in dem Abschnitt, auf welchem eine Relativbewegung der Gleitsteine 60 längs der Antriebswellenlängsachse AWL stattfinden soll, mit einem axial konstanten Umfangsprofil, beispielsweise einem Keilwellenprofil, ausgebildet ist. Ein solches Umfangsprofil gestattet dem Gleitstein 60, in Richtung der Antriebswellenlängsachse AWL relativ zur Antriebswelle 44 verschoben zu werden und dennoch ein Drehmoment von der Antriebswelle 44 übertragen zu erhalten.

Die Antriebswelle 44 kann jedoch auch als Zahnwelle ausgebildet sein und kann mit mit einer Verzahnung versehenen Gleitsteinen in drehmomentübertragenden kämmendem Eingriff stehen. In diesem Falle können die Gleitsteine längs des Verzahnungseingriffs relativ zur Antriebswelle 44 an dieser axial entlang gleiten.

Auch im vorliegenden Beispiel mit von der Antriebswelle 44 durchsetzten Gleitsteinen 60 können diese an ihrem Außenumfang mit einer Verzahnung ausgebildet sein, welche mit einer passenden Verzahnung am Außenumfang der Spindelmuttern 58 vorteilhafterweise in kämmendem Formschlusseingriff stehen kann. Dadurch können die Gleitsteine 60 mit den Spindelmuttern 58 in Drehmomentübertragungsverbindung stehen.

Bei stillstehender Antriebswelle 44 sind die mit Gleitsteinen 60 kämmenden Spindelmuttern 58 also über die Gleitsteine 60 an der Antriebswelle 44 drehmomentmäßig abgestützt, so dass ein Mitdrehen der drehbar in den Modulen 50b-50h gelagerten Spindelmuttern 58g-58h bei Drehung der Antriebsspindel um ihre Antriebsspindellängsachse ALS sicher verhindert wird.

Bei Drehung der Antriebswelle 44 kann dagegen durch die oben beschriebene Drehmoment-Übertragungsverbindung von der Antriebswelle 44 über die Gleitsteine 60 hin zu den Spindelmuttern 58 eine Relativdrehung der drehbar in den Modulen 50b-50h gelagerten Spindelmuttern 58b-58h relativ zur Antriebsspindel 40 erfolgen, so dass je nach individueller Drehzahl einer Spindelmutter 58b-58h eine Verlagerung der Module 50b-50h längs der Antriebsspindellängsachse und damit längs der Bewegungsbahn B erfolgen kann.

Drehungen von Antriebsspindel 40 und Antriebswelle 44 können auch gleichzeitig erfolgen, so dass sich dann eine gemeinsame Blockbewegung aller Module 50a-50h und eine individuelle Relativbewegung der Module 50a-50h überlagern.

Im vorliegenden Fall ist durch unterschiedliche Durchmesserverhältnisse der in den einzelnen Modulen 50b-50h miteinander kämmenden Gleitsteine 60b-60h und Spindelmuttern 58b-58h angezeigt, dass ein Rotationsbewegungs-Umsetzungsverhältnis, mit welchem eine Drehzahl der Antriebsspindel 44 über die Gleitsteine 60 zu einer Drehzahl der Spindelmuttern 58 umgesetzt wird, von Modul zu Modul verschieden sein kann.

Im vorliegend dargestellten Beispiel einer bevorzugten gleichförmigen Spreizbewegung, bei welcher sich die Module 50a-50h bei Drehung der Antriebsspindel 44 abhängig vom Drehsinn gleichförmig voneinander entfernen oder aneinander annähern, kann vorgesehen sein, dass die Änderung des Durchmessers der Gleitsteine zweier axial (bezogen auf die Antriebswellenlängsachse AWL) unmittelbar benachbarter Gleitsteine 60 für alle Module 50b-50h gleich groß ist.

Gleiches gilt vorteilhafterweise auch für die Durchmesserunterschiede zwischen axial unmittelbar benachbarten Spindelmuttern 58b-58h, welche mit Gleitsteinen 60b-60h in kämmendem Eingriff sind.

Da der Abstand zwischen der Antriebswellenlängsachse AWL und der Antriebsspindellängsachse ASL für alle Module 50a-50h gleich groß ist, ist vorzugsweise auch der Durchmesserunterschied zwischen zwei axial unmittelbar benachbarten Spindelmuttern 58 genauso groß wie der Durchmesserunterschied zweier unmittelbar axial benachbarter Gleitsteine 60, wobei die Durchmesserunterschiede der drehenden Getriebebauteile: Spindelmutter 58 und Gleitstein 60, lediglich unterschiedliche Vorzeichen tragen. Während also die Durchmesser der Gleitsteine von Modul 50b zu Modul 50h hin vorzugsweise um denselben Betrag größer werden, nehmen vorzugsweise die Durchmesser der Spindelmuttern von Modul 50b bis Modul 50h hin in gleichem Maße schrittweise ab.

Abweichend von dem in Fig. 8 dargestellten Beispiel kann auch das Randmodul 50a wie die Module 50b bis 50h mit relativ zum Modul drehbarer Spindelmutter und einem Gleitstein ausgerüstet sein. Dies würde noch größere kinematische Freiheiten gestatten als die in Fig. 8 dargestellte einfachere Bauweise mit dem lediglich durch die Drehung der Antriebsspindel 40 verlagerbaren Randmodul 50a.

In Fig. 9 ist das Modul 50b im Detail dargestellt.

Dort ist insbesondere gezeigt, wie der Gleitstein 60b und die Spindelmutter 58b zwischen den Stirnplatten 52b und 56b gehalten sind, und wie beide Getriebebauteile in Aussparungen 52b1 und 52b2 in der Stirnplatte 52b sowie 56b1 und 56b2 der Stirnplatte 56b mit in diese hinein vorstehenden Axialvorsprüngen 60b1 bzw. 58b1 in einfachster Weise effektiv drehbar an dem Modul 50b aufgenommen sind. Das Mantelgehäuseteil 54b ist vorzugsweise für alle Module gleich ausgeführt, um die Fertigung zu erleichtern. Seine Dicke ist geringer als der parallel zur Bewegungsbahn zu messende Abstand der Stirnflächen der Axialvorsprünge 58b1 bzw. 60b1, um sicherzustellen, dass diese in die genannten Aussparungen der Stirnplatten 52b bzw. 56b einragen können.

In Fig. 10 ist das beispielhafte Randmodul 50a mit drehfester Spindelmutter 58a in Explosionsdarstellung gezeigt.

Die drehfeste Spindelmutter 58a weist einen Vierkantvorsprung oder allgemein polygonal berandeten Vorsprung 58a1 auf, welcher in ebenfalls polygonal berandete Aussparungen 52a2 und 56a2 einragt, und so formschlüssig an einer Drehung um die Antriebsspindellängsachse ASL gehindert wird. Abgesehen von der Form der Ausschnitte 52a1, 52a2, 56a1 und 56a2 sind die Stirnplatten 52a und 56a des Randmoduls 50a mit jenen der übrigen Module 50b bis 50h identisch. Das Mantelgehäuseteil 54a ist zur Fertigungserleichterung mit den übrigen Mantelgehäuseteilen 54b-54h identisch.

Die Spindelmuttern 58a-58h sind Teil des Blockbewegungsübertragungsgetriebes 38, die Gleitsteine 60a-60h sind Teil des Relativbewegungsübertragungsgetriebes 42.

## Patentansprüche

1. Kombinierte Block- und Individualantriebsvorrichtung, welche dazu ausgebildet ist, eine Mehrzahl von, vorzugsweise gleichartigen, Bewegungsobjekten (14a-14h), wie etwa Pipettierkanälen (14a-14h), sowohl als Block gemeinsam längs einer Bewegungsbahn (B) zu bewegen, als auch mit einem vorgegebenen Relativbewegungsmuster relativ zueinander längs der Bewegungsbahn (B) zu bewegen, wobei die Antriebsvorrichtung einen Blockbewegungsantrieb (34) und ein Blockbewegungsübertragungsgetriebe (38) aufweist, welches ein Blockbewegungsausgabeteil des Blockbewegungsantriebs (34) mit den Bewegungsobjekten (14a-14h) bewegungsübertragend koppelt, und wobei die Antriebsvorrichtung weiter einen gesondert vom Blockbewegungsantrieb (34) betreibbaren Relativbewegungsantrieb (36) und ein Relativbewegungsübertragungsgetriebe (42) aufweist, welches ein Relativbewegungsausgabeteil des Relativbewegungsantriebs (36) bewegungsübertragend mit den Bewegungsobjekten (14a-14h) koppelt, wobei das Blockbewegungsübertragungsgetriebe (38) eine parallel zur Bewegungsbahn (B) verlaufende Antriebsspindel (40) und an jedem Bewegungsobjekt (14a-14h) eine von der Antriebsspindel (40) durchsetzte Spindelmutter (58a-58h) aufweist, welche gemeinsam mit dem Bewegungsobjekt (14a-14h) längs einer parallel zur Bewegungsbahn (B) verlaufenden Antriebsspindellängsachse (ASL) bewegbar ist, wobei die Antriebsspindel (40) durch Betrieb des Blockbewegungsantriebs (34) in Rotation um die Antriebsspindellängsachse (ASL) versetzbar ist, wobei an wenigstens einem Teil der Bewegungsobjekte (14a-14h), vorzugsweise an allen Bewegungsobjekten (14b-14h) bis auf einem (14a), besonders bevorzugt an allen Bewegungsobjekten (14a-14h), die jeweilige wenigstens eine Spindelmutter (58b-58h) des Bewegungsobjekts (14b-14h) relativ zu diesem um die Antriebsspindellängsachse (ASL) drehbar aufgenommen ist, wobei das Relativbewegungsübertragungsgetriebe (42) eine Antriebswelle (44) mit zur Antriebsspindellängsachse (ASL) paralleler Antriebswellenlängsachse (AWL) und an jedem Bewegungsobjekt (14b-14h) mit relativ zu diesem um die Antriebsspindellängsachse (ASL) drehbarer Spindelmutter (58b-58h) einen gemeinsam mit dem Bewegungsobjekt (14b-14h) relativ zur Antriebswelle (44) längs der Antriebswellenlängsachse (AWL) beweglichen und gemeinsam mit der Antriebswelle (44) drehbaren Gleitstein (60b-60h) aufweist, wobei der Gleitstein (60b-60h) und die Spindelmutter (58b-58h) ein und desselben Bewegungsobjekts (14b-14h) derart miteinander in Drehmoment-Übertragungsverbindung stehen, dass die Spindelmutter (58b-58h) durch Rotation der Antriebswelle (44) um die Antriebswellenlängsachse (AWL) unter Bewegungsvermittlung des Gleitsteins (60b-60h) zur Drehung um die Antriebsspindellängsachse (ASL) antreibbar ist, und bei Drehung der Antriebsspindel (40) in Umfangsrichtung um die Antriebsspindellängsachse (ASL) unter Drehmomentübertragung durch den Gleitstein (60b-60h) an der Antriebswelle (44) abgestützt ist.

2. Vorrichtung nach Anspruch 1,
**dadurch gekennzeichnet, dass** der Gleitstein (60b-60h) von der Antriebswelle (44) durchsetzt gemeinsam mit dieser um die Antriebswellenlängsachse (AWL) drehbar ist.

3. Vorrichtung nach Anspruch 1 oder 2,
**dadurch gekennzeichnet, dass** die relativ zu dem sie jeweils tragenden Bewegungsobjekt (14b-14h) um die Antriebsspindellängsachse (ASL) drehbare Spindelmutter (58b-58h) und der Gleitstein (60b-60h) desselben Bewegungsobjekts (14b-14h) in formschlüssiger Drehmoment-Übertragungsverbindung miteinander stehen, gegebenenfalls unter drehmomentübertragender Zwischenanordnung wenigstens eines Zwischenglieds, vorzugsweise mittels kämmender Verzahnungsformationen an der Spindelmutter (58b-58h) oder/und am Gleitstein (60b-60h) oder/und gegebenenfalls am Zwischenglied.

4. Vorrichtung nach Anspruch 1 oder 2,
**dadurch gekennzeichnet, dass** die Antriebswelle (44) wenigstens über einen axialen Relativbewegungsabschnitt, in welchem jene Gleitsteine (60b-60h), welche mit Spindelmuttern (58b-58h) in Drehmoment-Übertragungsverbindung stehen, die relativ zu dem sie jeweils tragenden Bewegungsobjekt (14b-14h) drehbar an diesem aufgenommen sind, längs der Antriebswellenlängsachse (AWL) relativ zueinander bewegbar sind, eine im Wesentlichen konstante, bezogen auf die Antriebswellenlängsachse (AWL) nicht-rotationssymmetrische Außenkontur aufweist.

5. Vorrichtung nach Anspruch 2, insbesondere unter Einbeziehung des Anspruchs 3 oder 4,
**dadurch gekennzeichnet, dass** die Antriebswelle (44) als Keilwelle ausgebildet ist.

6. Vorrichtung nach einem der vorhergehenden Ansprüche,
**dadurch gekennzeichnet, dass** die Rotationsbewegungs-Umsetzungsverhältnisse, mit welchen in einem Bewegungsobjekt eine Rotation der Antriebswelle (44) um die Antriebswellenlängsachse (AWL) in eine Rotation der Spindelmutter (58b-58h) um die Antriebsspindellängsachse (ASL) umgesetzt wird, für unterschiedliche Bewegungsobjekte (14b-14h) derselben Vorrichtung unterschiedlich sind.

7. Vorrichtung nach Anspruch 6,
**dadurch gekennzeichnet, dass** die Unterschiede zwischen den Rotationsbewegungs-Umsetzungsverhältnissen zweier längs der Bewegungsbahn (B) unmittelbar benachbarter Bewegungsobjekte (14b-14h) für alle sowohl im Block als auch relativ zu einander mit einem vorbestimmten Bewegungsmuster bewegbaren Bewegungsobjekte (14b-14h) einer Vorrichtung um nicht mehr als 5 %, vorzugsweise um nicht mehr als 3 %, bezogen auf den kleinsten auftretenden Unterschiedswert verschieden sind, besonders bevorzugt konstant sind.

8. Vorrichtung nach Anspruch 6 oder 7, unter Einbeziehung des Anspruchs 3,
**dadurch gekennzeichnet, dass** sowohl der Gleitstein (60b-60h) als auch die Spindelmutter (58b-58h) ein und desselben Bewegungsobjekts (14b-14h) als Rotationskörper, insbesondere als Reib- oder Zahnräder, ausgebildet sind, wobei die Durchmesser der Gleitsteine (60b-60h) oder/und der Spindelmuttern (58b-58h) oder/und von etwaig zwischen diesen Drehmoment übertragend angeordneten Zwischenrotationskörpern von unterschiedlichen Bewegungsobjekten (14b-14h), die sowohl im Block als auch relativ zu einander mit einem vorbestimmten Bewegungsmuster bewegbar sind, unterschiedlich sind.

9. Vorrichtung nach Anspruch 8, unter Einbeziehung des Anspruchs 7,
**dadurch gekennzeichnet, dass** die Unterschiede zwischen den Durchmessern der Gleitsteine (60b-60h) oder/und der Spindelmuttern (58b-58h) oder/und von zwischen diesen etwaig Drehmoment übertragend angeordneten Zwischenrotationskörpern zweier längs der Bewegungsbahn (B) unmittelbar benachbarter Bewegungsobjekte (14b-14h) für alle sowohl im Block als auch relativ zu einander mit einem vorbestimmten Bewegungsmuster bewegbaren Bewegungsobjekte (14b-14h) einer Vorrichtung um nicht mehr als 5 %, vorzugsweise um nicht mehr als 3 %, bezogen auf den kleinsten Durchmesser des jeweiligen Rotationskörpers verschieden sind, besonders bevorzugt konstant sind.

10. Vorrichtung nach Anspruch 8 oder 9,
**dadurch gekennzeichnet, dass** die Summe der Durchmesser aller an einer Drehmomentübertragung von der Antriebswelle (44) auf die Spindelmutter (58b-58h) eines Bewegungsobjekts (14b-14h) beteiligten Rotationskörper (60b-60h) des Bewegungsobjekts (14b-14h) für alle sowohl im Block als auch relativ zu einander mit einem vorbestimmten Bewegungsmuster bewegbaren Bewegungsobjekte (14a-14h) einer Vorrichtung konstant sind.

11. Vorrichtung nach einem der vorhergehenden Ansprüche,
**dadurch gekennzeichnet, dass** in einem Bewegungsobjekt (14b-14h) mit relativ drehbarer Spindelmutter (58b-58h) zur Übertragung von Drehmoment von der Antriebswelle (44) zur Spindelmutter (58b-58h) nur der Gleitstein (60b-60h) vorgesehen ist.

12. Pipettiervorrichtung mit einer Mehrzahl von gesondert ausgebildeten Pipettierkanälen (14a-14h), von welchen jeder an einem gesondert ausgebildeten Pipettierkanalträger (48a-48h) aufgenommen ist, wobei die Pipettierkanalträger (48a-48h) durch eine Linearführungseinrichtung (16) zur Bewegung längs der Bewegungsbahn (B) geführt sind und wobei die Pipettiervorrichtung eine kombinierte Block- und Individualantriebsvorrichtung (32) gemäß einem der vorhergehenden Ansprüche mit der Maßgabe aufweist, dass die Pipettierkanalträger (48a-48h) die Bewegungsobjekte sind.

13. Pipettiervorrichtung nach Anspruch 12,
**dadurch gekennzeichnet, dass** sie eine zweite Linearführungseinrichtung (26) mit zur Bewegungsbahn (B) der vorgenannten orthogonaler Führungsrichtung (Y) aufweist, durch welche die vorgenannte Linearführungseinrichtung (16) mit den daran geführten Pipettierkanalträgern (48a-48b) in der zur Bewegungsbahn (B) orthogonalen Führungsrichtung (Y) als Bewegungseinheit bewegbar geführt ist.

## Claims

1. A combined block and individual drive device adapted for moving a plurality of preferably similar movement objects (14a-14h), such as for example pipetting channels (14a-14h), together as a block along a movement path (B) and also with a predetermined relative movement pattern in relation to one another along the movement path (B), wherein the drive device comprises a block movement drive (34) and a block movement transmission gear (38) coupling a block movement output part of the block movement gear (34) to the movement objects (14a-14h) for transmitting movement, and wherein the drive device furthermore comprises a relative movement drive (36) which can be operated separately from the block movement drive (34) and a relative movement transmission gear (42) coupling a relative movement output part of the relative movement drive (36) to the movement objects (14a-14h) for transmitting movement, wherein the block movement transmission gear (38) comprises a drive spindle (40) parallel to the movement path (B) and at each movement object (14a-14h) a spindle nut (58a-58h) through which the drive spindle (40) passes and which can be moved together with the movement object (14a-14h) along a drive spindle longitudinal axis (ASL) which is parallel to the movement path (B),
wherein the drive spindle (40) can be set into rotation about the drive spindle longitudinal axis (ASL) by operating the block movement drive (34),
wherein at least at part of the movement objects (14a-14h), preferably at all movement objects (14b-14h) except for one (14a), particularly preferred at all movement objects (14a-14h), the at least one spindle nut (58b-58h) of the movement object (14b-14h) is carried rotatably about said drive spindle longitudinal axis (ASL) in relation to the latter,
wherein said relative movement transmission gear (42) comprises a drive shaft (44) with a drive shaft longitudinal axis (AWL) parallel to the drive spindle longitudinal axis (ASL) and at each movement object (14b-14h) with a spindle nut (58b-58h) rotatable about said drive spindle longitudinal axis (ASL) in relation to the latter a sliding block (60b-60h) which can be moved together with the movement object (14b-14h) in relation to the drive shaft (44) along the drive shaft longitudinal axis (AWL) and which can be rotated together with the drive shaft (44), wherein the sliding block (60b-60h) and the spindle nut (58b-58h) of one and the same movement object (14b-14h) have such a torque transmission connection that the spindle nut (58b-58h) can be driven for rotation about the drive spindle longitudinal axis (ASL) by rotating the drive shaft (44) about the drive shaft longitudinal axis (AWL) with a movement transmission by the sliding block (60b-60h) and is supported at the drive shaft (44) when the drive shaft (40) is rotated in the circumferential direction about the drive spindle longitudinal axis (ASL) with a torque transmission by the sliding block (60b-60h).

2. Device according to claim 1,
**characterized in that** the sliding block (60b-60h), being penetrated by the drive shaft (44), can be rotated about the drive shaft longitudinal axis (AWL) together with the drive shaft (44).

3. Device according to claim 1 or 2,
**characterized in that** the spindle nut (58b-58h) which is rotatable about the drive spindle longitudinal axis (ASL) in relation to the movement object (14b-14h) which is carrying it and the sliding block (60b-60h) of the same movement object (14b-14h) have a form-fit torque transmission connection, possibly with an intermediate arrangement transmitting torque of at least one intermediate element, preferably by means of a meshing interlocking structure at the spindle nut (58b-58h) or/and at the sliding block (60b-60h) or/and possibly at the intermediate element.

4. Device according to claim 1 or 2,
**characterized in that** the drive shaft (44) has, via an axial relative movement portion, where the sliding blocks (60b-60h), which have a torque transmission connection to the spindle nuts (58b-58h), which, in relation to the movement object (14b-14h) carrying it, are received rotatably at the latter, can be moved towards each other along the drive shaft longitudinal axis (AWL), a substantially constant outer contour which is not rotationally symmetric in relation to the drive shaft longitudinal axis (AWL).

5. Device according to claim 2, in particular also taking into account claim 3 or 4,
**characterized in that** the drive shaft (44) is adapted as a spline shaft.

6. Device according to one of the preceding claims,
**characterized in that** the rotation movement conversion conditions under which in a movement objects of rotation of the drive shaft (44) about the drive shaft longitudinal axis (AWL) is converted into a rotation of the spindle nut (58b-58h) about the drive spindle longitudinal axis (ASL), are different for different movement objects (14b-14h) of the same device.

7. Device according to claim 6,
**characterized in that** the differences between the rotation movement conversion conditions of two directly adjacent movement objects (14b-14h) along the movement path (B) have for all movement objects (14b-14h) of a device which can be moved as a block or in relation to one another with a predetermined movement pattern the value of not more than 5%, preferably not more than 3%, referring to the smallest occurring difference value, and are particularly preferred constant.

8. Device according to claim 6 or 7, also taking into account claim 3,
**characterized in that** the sliding block (60b-60h) as well as the spindle nut (58b-58h) of one and the same movement object (14b-14h) are adapted as a rotation body, in particular as friction or toothed wheels, wherein the diameters of the sliding block (60b-60h) or/and the spindle nuts (58b-58h) or/and of possible intermediate rotation bodies, arranged between the latter and transmitting torque, of different movement objects (14b-14h) which can be moved as a block or in relation to one another with a predetermined movement pattern are different.

9. Device according to claim 8, also taking into account claim 7,
**characterized in that** the differences between the diameters of the sliding blocks (60b-60h) or/and the spindle nuts (58b-58h) or/and of possible intermediate rotation bodies, arranged between the latter and transmitting torque, of two movement objects (14b-14h) which are directly adjacent along the movement path (B) for all movement objects (14b-14h) of the device which can be moved as a block or in relation to one another with a predetermined movement pattern have a difference of not more than 5%, preferably not more than 3%, referring to the smallest occurring difference value, and are particularly preferred constant.

10. Device according to claim 8 or 9,
**characterized in that** the sum of the diameters of all rotation bodies (60b-60h) of a movement object (14b-14h) participating at the torque transmission from the drive shaft (44) to the spindle nut (58b-58h) of a movement object (14b-14h) are constant for all movement objects (14a-14h) of the device which can be moved as a block or in relation to one another with a predetermined movement pattern.

11. Device according to one of the preceding claims,
**characterized in that** in a movement object (14b-14h) with a relatively rotatable spindle nut (58b-58h) for transmitting a torque from the drive shaft (44) to the spindle nut (58b-58h) only the sliding block (60b-60h) is provided.

12. Pipetting device with a plurality of separately adapted pipetting channels (14a-14h), each of which is received at a separately adapted pipetting channel carrier (48a-48h), wherein the pipetting channel carriers (48a-48h) are guided by the linear guidance device (16) for a movement along the movement path (B) and wherein the pipetting device comprises a combined block and individual drive device (32) according to one of the preceding claims, provided that the pipetting channel carriers (48a-48h) are the movement objects.

13. Pipetting device according to claim 12,
**characterized in that** it comprises a second linear guidance device (26) with a guiding direction (Y) which is orthogonal to the movement path (B) of the above-mentioned one, by means of which the above-mentioned linear guidance device (16) with the pipetting channel carriers (48a-48b) guided thereat is guided for movement in the guiding direction (Y), orthogonal to the movement path (B), as a movement unit.

## Revendications

1. Dispositif d'entraînement en bloc ou individuel combiné, adapté pour déplacer une pluralité d'objets de mouvement (14a-14h), de préférence similaires, par exemple des canaux de pipetage (14a-14h), en bloc le long d'une voie de mouvement (B) ou en relation l'un par rapport à l'autre selon un type de mouvement relatif le long de la voie de mouvement (B), où le dispositif d'entraînement comprend un entraînement de mouvement en bloc (34) et un engrenage de transmission de mouvement en bloc (38), qui accouple une section de sortie de mouvement en bloc de l'entraînement de mouvement en bloc (34) aux objets de mouvement (14a-14h) en transmettant un mouvement et où le dispositif d'entraînement comprend en outre un entraînement de mouvement relatif (36) et un engrenage de transmission de mouvement relatif (42) qui peut être opéré séparément de l'entraînement de mouvement en bloc (34) et qui accouple une section de sortie de mouvement relatif de l'entraînement de mouvement relatif (36) aux objets de mouvement (14a-14h) en transmettant du mouvement, l'engrenage de transmission de mouvement en bloc (38) comprenant une broche d'entraînement (40) parallèle à la voie de mouvement (B) et à chaque objet de mouvement (14a-14h) un écrou de broche (58a-58h), à travers duquel passe la broche d'entraînement (40), et qui peut être déplacé avec l'objet de mouvement (14a-14h) le long d'un axe longitudinal de broche d'entraînement (ASL) parallèle à la voie de mouvement (B),
où au moins à une partie des objets de mouvement (14a-14h), de préférence a tous les objets de mouvement (14b-14h) sauf un seul (14a), ledit au moins un écrou de broche (58b-58h) de l'objet de mouvement (14b-14h) est, par rapport à ce dernier, reçu de manière rotative autour de l'axe longitudinal de broche d'entraînement (ASL), où l'engrenage de transmission de mouvement relatif (42) comprend un arbre d'entraînement (44) avec un axe longitudinal d'arbre d'entraînement (AWL) parallèle à l'axe longitudinal de broche d'entraînement (ASL) et à chaque objet de mouvement (14b-14h), avec un écrou de broche (58b-58h) qui par rapport à ce dernier peut être pivoté autour de l'axe longitudinal de broche d'entraînement (ASL), un coulisseau (60b-60h) qui peut être déplacé par rapport à l'arbre d'entraînement (44) le long de l'axe longitudinal d'arbre d'entraînement (AWL) et peut être pivoté avec l'arbre d'entraînement (44), le coulisseau (60b-60h) et l'écrou de broche (58b-58h) d'un même objet de mouvement (14b-14h) sont connectés pour une transmission de couple de sorte que l'écrou de broche (58b-58h) peut être entraîné à une rotation autour de l'axe longitudinal de broche d'entraînement (ASL) par la rotation de l'arbre d'entraînement (44) autour de l'axe longitudinal d'arbre d'entraînement (AWL) et une transmission de mouvement du coulisseau (60b-60h), et est supporté à l'arbre d'entraînement (44) lors de la rotation de la broche d'entraînement (40) dans un sens circonférentiel autour de l'axe longitudinal de broche d'entraînement (ASL) avec une transmission de couple par le coulisseau (60b-60h).

2. Dispositif selon la revendication 1,
**caractérisé en ce que** le coulisseau (60b-60h) à travers lequel l'arbre d'entraînement (44) passe peut être pivoté autour de l'axe longitudinal d'arbre d'entraînement (AWL) avec ce dernier.

3. Dispositif selon la revendication 1 ou 2,
**caractérisé en ce que** l'écrou de broche (58b-58h) qui peut être pivoté par rapport à l'objet de mouvement (14b-14h) qui le porte autour de l'axe longitudinal de broche d'entraînement (ASL) et le coulisseau (60b-60h) du même objet de mouvement (14b-14h) sont liés par une liaison solidaire pour une transmission de couple, le cas échéant avec l'arrangement intermédiaire d'au moins und élément intermédiaire transmettant du couple, de préférence par des formations dentées d'engrènement à l'écrou de broche (58b-58h) ou/et au coulisseau (60b-60h) ou/et le cas échéant à l'élément intermédiaire.

4. Dispositif selon la revendication 1 ou 2,
**caractérisé en ce que** l'arbre d'entraînement (44) comprend, via une section de mouvement relatif axial, où les coulisseaux (60b-60h) qui sont liés pour une transmission de couple à des écrous d'arbre (58b-58h) qui par rapport à l'objet de mouvement (14b-14h) qui les porte sont reçus de manière rotative à ce dernier, un contour externe essentiellement constant et par rapport à l'axe longitudinal d'arbre d'entraînement (AWL) sans symétrie de rotation.

5. Dispositif selon la revendication 2, en particulier en tenant compte de la revendication 3 ou 4,
**caractérisé en ce que** l'arbre d'entraînement (44) est adapté sous forme d'arbre cannelé.

6. Dispositif selon une des revendications précédentes,
**caractérisé en ce que** les conditions de conversion du mouvement de rotation sous lesquelles dans un objet de mouvement une rotation de l'arbre d'entraînement (44) autour de l'axe longitudinal d'arbre d'entraînement (AWL) est convertit en une rotation de l'écrou de broche (58b-58h) autour de l'axe longitudinal d'arbre d'entraînement (AWL) sont différentes pour des objets de mouvement (14b-14h) différents du même dispositif.

7. Dispositif selon la revendication 6,
**caractérisé en ce que** les différences entre les conditions de conversion du mouvement de rotation pour deux objets de mouvement (14b-14h) directement adjacents le long de la voie de mouvement (B) pour tous les objets de mouvement (14b -14h) mobiles en bloc ou en relation l'un à l'autre suivant un plan de mouvement prédéterminé d'un dispositif sont de 5% ou moins, de préférence de 3% ou moins par rapport à la plus petite différence observée ou sont de manière particulièrement préférée constantes.

8. Dispositif selon la revendication 6 ou 7, en tenant compte de la revendication 3,
**caractérisé en ce que** le coulisseau (60b-60h) ainsi que l'écrou de broche (58b-58h) d'un même objet de mouvement (14b-14h) sont adaptés en tant que corps de rotation, en particulier en tant que roue de friction ou roue dentée, les diamètres des coulisseaux (60b-60h) ou/et des écrous d'arbre (58b-58h) ou/et d'éventuels corps de rotation intermédiaires arrangés entre les derniers pour transmettre un couple d'objets de mouvement (14b-14h) différents mobiles en bloc ou en relation l'un à l'autre suivant un plan de mouvement prédéterminé sont différents.

9. Dispositif selon la revendication 8, en tenant compte de la revendication 7,
**caractérisé en ce que** les différences entre les diamètres des coulisseaux (60b-60h) ou/et des écrous d'arbre (58b-58h) ou/et d'éventuels corps de rotation intermédiaires arrangés entre les derniers pour transmettre un couple de deux objets de mouvement (14b-14h) directement adjacents le long de la voie de mouvement (B) pour tous les objets de mouvement (14b-14h) mobiles en bloc ou en relation l'un à l'autre suivant un plan de mouvement prédéterminé d'un dispositif sont de 5% ou moins, de préférence de 3% ou moins par rapport à la plus petite différence observée ou sont de manière particulièrement préférée constantes.

10. Dispositif selon la revendication 8 ou 9,
**caractérisé en ce que** la somme des diamètres de tous les corps de rotation (60b-60h) d'un objet de mouvement (14b-14h) participant à la transmission du couple de l'arbre d'entraînement (44) à l'écrou de broche (58b-58h) d'un objet de mouvement (14b-14h) est constante pour tous les objets de mouvement (14a-14h) mobiles en bloc ou en relation l'un à l'autre suivant un plan de mouvement prédéterminé.

11. Dispositif selon une des revendications précédentes,
**caractérisé en ce que** dans un objet de mouvement (14b-14h) avec un écrou de broche (58b-58h) avec rotation relative pour transmettre du couple de l'arbre d'entraînement (44) à l'écrou de broche (58b-58h), seulement le coulisseau (60b-60h) est prévu.

12. Dispositif de pipettage avec une pluralité de canaux de pipettage (14a-14h) formés séparément, chacun étant reçu à un support de canaux de pipettage (48a-48h) formé séparément, les supports de canaux de pipettage (48a-48h) étant guidés par un dispositif de guidage linéaire (16) pour un mouvement le long de la voie de mouvement (B) et le dispositif de pipettage comprenant un dispositif d'entraînement en bloc et individuel combiné (32) selon une des revendications précédentes, à condition que les supports de canaux de pipettage (48a-48h) sont les objets de mouvement.

13. Dispositif de pipettage selon la revendication 12,
**caractérisé en ce qu'**il comprend un deuxième dispositif de guidage linéaire (26) avec un sens de guidage (Y) orthogonal à la voie de mouvement (B) du guidage mentionné ci-dessus, par lequel le dispositif de guidage linéaire (16) mentionné ci-dessus avec les supports de canaux de pipettage (48a-48b) guidés par celui-ci est guidé de manière mobile en tant qu'unité de mouvement dans le sens de guidage (Y) orthogonal à la voie de mouvement (B).
